(19) Europäisches Patentamt
European Patent Office
Office européen des brevets

(11) Publication number: 0 400 936 A1

(12) # EUROPEAN PATENT APPLICATION

(21) Application number: 90305770.1

(22) Date of filing: 25.05.90

(51) Int. Cl.5: C08K 5/16, C08L 67/02, //(C08K5/16,5:3415,5:353), (C08K5/16,5:3417,5:353)

(30) Priority: 02.06.89 JP 140817/89

(43) Date of publication of application: 05.12.90 Bulletin 90/49

(84) Designated Contracting States: AT BE CH DE DK ES FR GB GR IT LI LU NL SE

(71) Applicant: POLYPLASTICS CO. LTD.
3-13, Azuchicho, 2-chome
Chuo-Ku Osaka-shi Osaka(JP)

(72) Inventor: Nakano, Michio
885-11, Miyajima
Fuji-shi, Shizuoka(JP)

(74) Representative: Jackson, Peter et al
HYDE, HEIDE & O'DONNELL 10-12 Priests Bridge
London SW15 5JE(GB)

(54) **Flame-retardant polyester resin compositions.**

(57) Flame-retardant polyester resin compositions suitable for prolonged use in a high-temperature environment are provided by a blend of (A) a thermoplastic polyester, (B) between 0.5 and 25% by weight (based on the weight of the composition) of a halogenated bisimide compound (C) between 0.1 and 10% by weight (based on the weight of the composition) of a bisoxazoline compound, and optionally (D) a polytetrafluoroethylene resin, and (E) an olefin polymer, fatty acid amide and/or a fatty acid ester of a polyhydric alcohol.

EP 0 400 936 A1

## FLAME-RETARDANT POLYESTER RESIN COMPOSITIONS

The present invention relates to flame-retardant polyester resin compositions. More particularly, the present invention relates to polyester resin compositions which exhibit excellent flame-retardance and mechanical strength properties, as well as improved heat resistance, particularly in terms of endurance in a high temperature atmosphere.

Thermoplastic polyester resins, such as polyethylene terephthalate and polybutylene terephthalate are used as engineering plastics in a variety of fields. For example, thermoplastic polyester resins are used to form automotive parts, and electrical and electronic components by virtue of the excellent mechanical and electrical properties, in addition to the desirable physical and chemical characteristics, that such resins exhibit.

Thermoplastic polyester resin compositions have previously contained an organic halogenous flame-retardant and, if necessary, an auxiliary flame-retardant in those situations where the resin was intended to be used in applications where flame-retardance was required, such as electrical components. However, polyester resin compositions containing conventional organic halogenous flame-retardants and auxiliary flame-retardants typically exhibit the following problems:

(i) the mechanical characteristics (such as elongation or impact resistance) of the molded article formed of such a resin is poor owing to the presence of the flame-retardant and the auxiliary flame-retardant;

(ii) the polyester base resin decomposes and deteriorates due to the presence of the flame-retardant or auxiliary flame-retardant and/or the interaction between such components during the preparation of the composition or the molding thereof;

(iii) the flame-retardant and auxiliary flame-retardant contained in the composition, in addition to the by-products formed upon decomposition of the flame-retardants, tend to corrode and stain mold surfaces thereby deleteriously affecting the dimensional accuracy of molded articles formed of such resin and reducing the processing efficiency;

(iv) the flame-retardant and auxiliary flame retardant contained in the composition, in addition to the by-products formed upon decomposition of the flame-retardants, often cause spots to be formed in molded articles composed of the resin, thereby lowering performance; and

(v) the flame-retardant added to polyester resins tends to "bleed" from the surface of molded articles owing to the poor compatibility thereof with the resin, thus causing several processing or handling problems.

In addition to the above problems, polyester resin compositions containing a flame retardant and other materials have recently been required to exhibit enhanced performance characteristics so as to meet the demands imposed by new end-use applications for molded articles in rather severe ambient environments. For example, polyester resin compositions have been required to exhibit excellent heat resistance, particularly in terms of stability of the composition's physical properties against the effects of prolonged service in high-temperature environments (i.e. long-term heat resistance).

Various means have been proposed for solving the above problems. For example, it has been proposed to add stabilizers such as specific phenol compounds, amines, phosphate or phosphite compounds for the purpose of improving the resin composition's long-term resistance. However, the addition of such stabilizers does not impart sufficient improvements to satisfy the more demanding long-term heat resistance performance requirements, even though some improvement is realized. It has also been proposed to add a thermoplastic elastomer, such as an olefin polymer or a rubbery polymer, for the purpose of improving the elongation properties of the resin composition. Although compositions containing elastomers in large amounts do show improvements in initial elongation properties, such compositions still exhibit poor stiffness properties which is problematic for applications requiring long-term heat resistance.

Furthermore, it is relatively easy to mold a thermoplastic polyester resin composition. However, a number of problems (such as poor mold release characteristics, and cracking) occur when the composition is molded into an article having a small or complicated shape or is formed into a film or a tube.

It will be appreciated that, while the prior proposals noted above do solve some of the problems associated with rendering polyester resins flame-retardant, the proposals themselves cause other problems. Thus, it is very difficult to obtain a flame-retardant polyester resin composition satisfactory in all respects. As a result, the development of a universally satisfactory polyester composition has been needed.

In broad terms, therefore, the present invention is directed to a flame-retardant polyester resin composition having excellent flame-retardance and other well-balanced properties which are not significantly lowered even after prolonged service in a high-temperature environment.

More specifically, the present invention relates to a flame-retardant polyester resin composition comprising:

(A) a thermoplastic polyester,

(B) between 0.5 and 25% by weight (based on the total weight of the composition) of a halogenated bisimide compound represented by the following general formula:

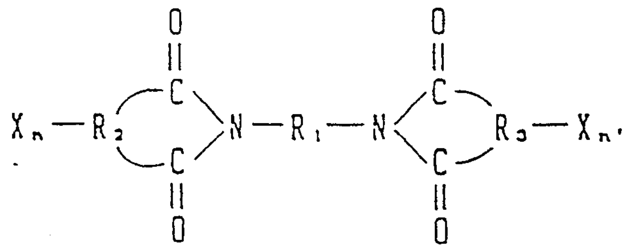

wherein $R_1$ stands for a divalent organic group, at least one of $R_2$ and $R_3$ stand for a divalent orgranic group containing a least one halogen atom (X), n is 1 to 4 and n′ is 0 to 4, and

(C) between 0.01 to 10% by weight based on the total weight of the composition) of a bisoxazoline compound.

The present invention further provides a flame-retardant polyester resin composition which optionally contains (D) a polytetrafluoroethylene resin and/or (E) at least one compound selected from among olefin polymers, fatty acid amides and fatty acid esters of polyhydric alcohols.

The thermoplastic polyester resin component (A) that may satisfactorily be used in the compositions of the present invention is preferably a polyester prepared by the polycondensation between a dicarboxylic acid and a dihydroxyl compound, or between a number of hydroxy carboxylic acids themselves, or between combinations of such compounds. The effects according to the present invention can be obtained with either homopolyester or copolyesters.

Examples of the dicarboxylic acids that may be used in the preparation of the polyester resin component (A) include conventional dicarboxylic acids such as terephthalic, isophthalic, naphthalenedicarboxylic, diphenyldicarboxylic, diphenyl ether dicarboxylic, diphenylethanedicarboxylic, cyclohexanedicarboxylic, adipic and sebacic acids and alkyl-or alkoxy-substituted derivatives thereof. These dicarboxylic acids and derivatives thereof may each be used as an ester-forming derivative thereof, for example, an ester thereof with a lower alcohol, such as dimethyl ester. Further, two or more of such dicarboxylic acids may be used simultaneously.

Examples of dihydroxyl compounds that may be used to form the polyester resin component (A) include ethylene glycol, propylene glycol, butanediol, neopentyl glycol, hydroquinone, resorcincol, dihydroxyphenyl, naphthalenediol, dihydroxydiphenyl ether, cyclohexanediol, 2,2-bis(4-hydroxyphenyl) propane and diethoxylated bisphenol A; and polyoxyalkylene glycols and alkyl- or alkoxy-substituted derivatives thereof. These compounds may be used alone or as a mixture of two or more of the same.

Examples of hydroxy carboxylic acids include hydroxybenzoic acid, hydroxynaphthoic acid and diphenylenehydroxycarboxylic acid and alkyl- or alkoxy- substituted derivatives thereof. Further, ester-forming derivatives of these compounds may be used. According to the present invention, one or more of the compounds described above may be used, if desired.

A small amount of a trifunctional monomer may also be used in addition to the above components to prepare a polyester having a branched or a crosslinked structure. Preferred trifunctional monomers include trimellitic, trimesic and pyromellitic acids, pentaerythritol and trimethylolpropane.

According to the present invention, any thermoplastic polyester prepared by the polycondensation of the monomer components as described above may be used as the base resin component (A). In this regard, the thermoplastic polyester component (A) is present in the compositions of the invention in an amount between about 65 to 99.49 wt.%. (Unless indicated otherwise, all weight percentages expressed herein are based upon the total weight of the composition.) Although the thermoplastic polyester resins may be used alone or as a mixture of two or more of the same, it is preferable to use polyalkylene terephthalate, and still more preferably polybutylene terephthalate or a copolymer containing at least 70% by weight of polybutylene terephthalate units.

The halogenated bisimide compound to be used as the component (B) in the compositions of the present invention is represented by the following formula (1):

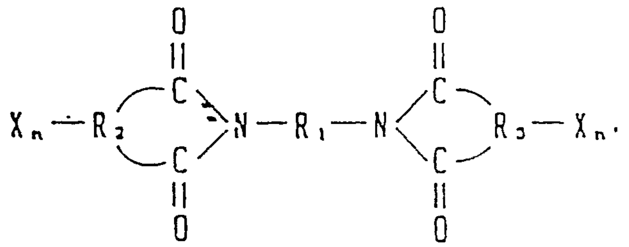

... (1)

wherein $R_1$ is a divalent organic group, such as an alkylene or arylene group, for example, methylene, ethylene, 1,4-butylene, 1,6-hexamethylene, phenylene, 4,4′-methylenediphenylene, 4,4′oxydiphenylene, xylylene, tetrachloroxylyene and tetrabromoxylylene groups. Lower alkylene groups, such as ethylene, butylene and hexamethylene groups are particularly preferred. $R_2$ and $R_3$, which may be the same or different (but are preferably the same), are each selected from divalent organic groups having at least one halogen atom (X), and preferably divalent halogenated aromatic groups represented by phenylene groups having 1 to 4 halogen atoms. The halogen is preferably bromine; a 4-bromophenylene group being particularly preferred.

Examples of preferred bisimide compounds represented by the general formula (1) include:
N,N′-(p- and m-phenylene)-bis[3,4,5,6-tetrachlorophthalimide],
N,N′(p- and m-phenylene)-bis [3,4,5,6-tetrabromophthalimide],
N,N′-(methylene-di-phenylene)-bis[3,4,5,6-tetrachlorophthalimide],
N,N′-(methylene-di-p-phenylene)-bis[3,4,5,6-tetrabromophthalimide],
N,N′-(oxy-di-p-phenylene)-bis[3,4,5,6-tetrachlorophthalimide],
N,N′-(oxy-di-p-phenylene)-bis[3,4,5,6-tetrabromophthalimide],
N,N′-(p- and m-phenylene)-bischlorendimide,
*N,N-(p- and m-tetrachloroxylylene)-bis-[3,4,5,6-tetrachlorophthalimide],
*N,N′-(p- and m-tetrachloroxylylene)-bis[3,4,5,6-tetrabromophthalimide],
*N,N′-(p- and m-tetrachloroxylylene)-bischlorendimide,
N,N′-(1,2-ethylene)-bischlorendimide,
N,N′-(1,2-ethylene)-bis[3,4,5,6-tetrabromophthalimide],
N,N′-bis(1,2,3,4,5-pentabromobenzyl) pyromellitimide and N,N′-bis(2,4,6-tribromphenyl(pyromellitimide.
(*note: in these compounds, the tetrahaloxylylene group means a 1,2,4,5-tetrahaloxylylene or 1,3,4,5-tetrahaloxylylene group).

Among them, lower alkylenebistetrabromophthalimides are preferred, with N,N′-ethylenebistetrabromophthalimide being particularly preferred.

The amount of the bisimide compound employed in the compositions of the present invention is between 0.5 and 25 % by weight, and preferably between 1 and 15% by weight. If the amount of the bisimide compound is too large, the mechanical and physical properties, heat stability and appearance of the composition will be poor. On the other hand, if the amount of the bisimide compound is too small, then insufficient flame-retardance of the composition will result.

According to the present invention, it is preferable to use an auxiliary flame-retardant in addition to the bisimide component (B). Examples of preferred auxiliary flame-retardants include oxides and hydroxides of metals, such as antimony trioxide, antimony tetroxide, antimony pentoxide, antimony halides, aluminium hydroxide, magnesium hydroxide and stannic oxide. The auxiliary flame-retardants are preferably used in amounts between 0 and 15% by weight, and more preferably between 1 and 10% by weight.

As described above, the compositions of the present invention are especially characterized by comprising specific amounts of (A) a thermoplastic polyester resin, (B) a halogenated bisimide compound, and (C) a bisoxazoline compound (which will be described below). Thus, the compositions of this invention exhibit excellent flame-retardance and well balanced mechanical properties. Moreover, the compositions of this invention do not separate or crystallize during molding or service, and maintain their excellent initial properties even after prolonged service in high temperature environments.

The bisoxazoline compounds employed as component (C) are represented by the following general formula (2);

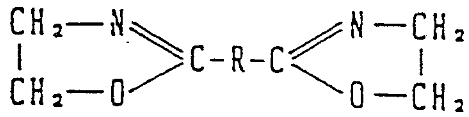 ... (2)

wherein R is a divalent organic group, and wherein the hydrogen atoms may each be replaced by an alkyl or aryl group.

Particular examples of preferred bisoxazoline compounds include
2,2'-methylenebis(2-oxazoline),
2,2'-ethylenebis-(2-oxazoline),
2,2'-ethylenebis(4-methyl-2-oxazoline),
2,2'-propylenebis(2-oxazoline),
2,2'-tetramethylene-bis(2-oxazoline),
2,2'-hexamethylenebis(2-oxazoline),
2,2'-octamethylenebis(2-oxazoline),
2,2'-p-phenylenebis-(2-oxazoline),
2,2'-p-phenylenebis(4-methyl-2-oxazoline),
2,2'-p-phenylenebis(4,4-dimethyl-2-oxazoline),
2,2'-p-phenylenebis(4-phenyl-2-oxazoline),
2,2'-m-phenylenebis(2-oxazoline)
2,2'-m-phenylenebis(4-methyl-2-oxazoline),
2,2'-m-phenylenebis(4,4-dimethyl-2-oxazoline),
2,2'-m-phenylenebis(4-phenyl-2-oxazoline),
2,2'-o-phenylenebis(2-oxazoline),
2,2'-phenylenebis(4-methyl-2-oxazoline),
2,2'-bis(2-oxazoline),
2,2'-bis(4-methyl-2-oxazoline),
2,2'-bis(4-ethyl-2-oxazoline) and
2,2'-bis(4-phenyl-2-oxazoline).
These bisoxazoline compounds may be used alone or as a mixture of two or more of the same.

It is preferable to use a bisoxazoline compound represented by the general formula (2) wherein R is an aromatic ring, e.g. a phenylene group. 2,2'-m-phenylenebis(2-oxazoline) and 2,2'-p-phenylenebis(2-oxazoline) are particularly preferred compounds.

Bisoxazoline compounds as described above are especially effective in maintaining the endurance of the polyester resin composition in a high temperature environment. As a result, the excellent initial physical properties of the compositions are maintained, when the bisoxazoline comound is employed together with the halogenated bisimide flame-retardant.

The amount of the bisoxazoline compound present in the compositions of this invention is between 0.01 and 10% by weight, and preferably between 0.03 and 5% by weight. If the amount of bisoxazoline compound is too small then little, if any, beneficial effect will be exhibited. On the other hand if the amount used is too large, then the resulting composition will unfavorably exhibit an extremely high viscosity, generate an increased amount of decomposition products, and become discolored during use.

Although flame-retardant compositions only comprising the components (A), (B) and (C) according to the present invention have excellent flame-retardance and well-balanced mechanical properties and are excellent in long term heat stability, as compared with flame-retardant compositions according to the prior art, it is preferable that the composition according to the present invention further contain (D) a polytetrafluoroethylene (PTFE) resin in addition to the above components (A), (B) and (C). The PTFE resin can be prepared by any known process, such as emulsion or suspension polymerization. Suitable polytetrafluoroethylene resins suitable for use in the present invention are per se well known and commercially available.

The PTFE resin may be selected from among those having a degree of polymerization (viscosity) which may be selected arbitrarily depending upon the dispersibility, processability and/or other properties of the composition that are desired. The PTFE resin may also be powder, granule or fiber form, and of a relatively wide particle size range of about 0.5μm to several millimeters. Although the specific shape and/or particle size of the PTFE resin may be selected experimentally with regard to the processability of the composition and the performance effects that are requested, it is preferred the PTFE resin be in the form of granules having an average particle size between 20 and 800μm, and more preferably between 100 and 700μ, so as

to promote handleability, workability and productivity during the preparation of the composition.

The amount of the PTFE resin that may be used in the composition of this invention is preferably between 0 and 5% by weight, and more preferably between 0.05 and 3% by weight. If the amount of the PTFE resin is too small, the resulting composition will exhibit poor flame-retardance, particularly in terms of drip resistance in the burning test according to UL-94. On the other hand, if the amount of PTFE is too large, then the resulting composition will unfavorably exhibit poor properties due to the poor dispersion of the PTFE in the polyester base resin.

The composition of the present invention may optionally further contain, as component (E), at least one compound selected from among olefin polymers, fatty acid amides and fatty acid esters of polyhydric alcohols to thereby obtain additional beneficial effects. The use of component (E) serves to improve the dispersion and mold release properties which may be lowered somewhat by the addition of the halogenated bisimide and bisoxazoline compounds, thereby improving the processability during molding of the composition.

The olefin polymer may be either a homopolymer or a copolymer containing a majority of olefin units. Specific examples include polyethylene, polypropylene and modifications thereof, as well as copolymers such as ethylene/propylene, ethylene/vinyl acetate, ethylene/acrylate and ethylene/acrilic acid copolymers and modifications thereof. It is preferred that the olefin polymer have a low molecular weight, and particularly be "waxy" and exhibit poor moldability in and of itself.

The fatty acid amides that may be used as the component (E) in the compositions of the present invention are preferably those prepared by the reaction of a higher straight-chain fatty acid having at least 10 atoms, with an aliphatic amine. Particular examples thereof include stearamide, ethylenebisstearamide, methylenebisstearamide, methylenebislauramide, palmitamide and oleamide. Of these compoumds, ethylenebisstearamide, methylenebisstearamide and methylenebislauramide are particularly preferred.

The fatty acid ester of polyhydric alcohol is most preferably an ester of a polyhydric alcohol such as glycerin, diglycerin, pentaerythritol, sorbitan or ethylene glycol, with a fatty acid such as lauric, palmitic, stearic, behenic or montanic acid. Esters of aliphatic acids having at least 12 carbon atoms with a polyhydric alcohol selected glycerin and pentaerythritol are preferred. Particularly preferred examples of the fatty acid esters include glycerin monostearate, glycerin monobehenate, pentaerythritol monostearate and pentaerythritol tetrastearate.

The amount of the component (E) that may be incorporated into the compositions of this invention is preferably between 0.05 and 5% by weight, and most preferably between 0.1 and 3% by weight. If the amount of component (E) exceeds 5% by weight, the mechanical properties of the composition will adversely be affected.

The resin compositions of the present invention may further contain a small amount of other thermoplastic resins as an auxiliary component provided that they do not hinder the beneficial effect of the present invention. Thermoplastic resins that may be used as an auxiliary component may be any thermoplastic resin that is stable at high temperatures and in the presence of halogenated bisimide compounds. Specific examples thereof include styrene-acrylonitrile copolymers, polyamide, polyacetal, polystyrene, styrene-butadiene copolymers, styrene-butadiene-acrylic acid (or an ester thereof) copolymers, polycarbonate, polyurethane, polyphenylene oxide, polyphenylene sulphide, polybutadiene, halogenated polyolefin, polyvinyl halide, butyl rubbers and copolymers each containing polyacrylate as a major component (including multi-layered graft copolymers). These resins may be used in selected amounts depending upon the properties that are desired.

The compositions of the present invention may further suitably contain additives which are conventionally incorporated into thermoplastic or thermosetting resins to achieve selected characteristics depending upon the properties that may be desired. Examples of such additives include stabilizers, such as antioxidants, heat stabilizers and ultraviolet absorbers; antistatic agents; coloring agents such as dyes and pigments; lubricating agents; plasticizers; crystallization promoters and nucleating agents.

It is also preferable in many cases that the compositions contain an organic or inorganic fibrous reinforcement, or an inorganic filler. Examples of fibrous reinforcements include inorganic fibers, such as fibers formed of glass, carbon, ceramic, boron, potassium titanate, and asbestos, and organic fibers such as aramide fibers. Examples of inorganic fillers include powdery, granular or flaky materials, such as calcium carbonate, highly dispersible silicate, alumina, aluminium hydroxide, talc, clay, mica, glass flake, glass powder, glass beads, quartz powder, quartz sand, wollastonite, carbon black, barium sulphate, plaster of Paris, silicon carbide, alumina, boron nitride and silicon nitride. These inorganic fillers may be used alone, or as a mixture of two or more of the same.

The compositions of the present invention can be prepared by conventional processes typically used for the preparation of resin compositions using conventional processing equipment. For example, the

necessary components may be mixed with one another, kneaded and extruded via a conventional screw extruder to obtain pellets which are thereafter molded. Alternatively, different compositional pellets may be mixed at a predetermined ratio, and then molded to obtain a molded article having the desired composition. In addition, one or more of the necessary components may be fed directly into a conventional extruder/kneader. In order to obtain a homogeneous composition, it is preferred that a part of the resin components be mixed as a fine powder with the remaining components.

The flame-retardant polyester resin compositions of the present invention as described above exhibit remarkably stable properties, even after exposure to high temperature for prolonged periods of time. Further, the compositions are also effectively improved in terms of the following characteristics:

1. the compositions exhibit excellent flame-retardance properties with no "bleeding" of the flame-retardant during service;
2. the tensile characteristics (toughness) of the compositions are excellent;
3. molded articles of the compositions have no heterochromatic spots, and
4. the compositions do not adhere to mold surfaces during molding and are heat-stable, so that little (if any) mold corrosion-caused decomposition products of the resin occurs, in addition to having excellent mold release capabilities, and being improved in terms of its molding processability.

As described above, the compositions of the present invention exhibit excellent long-term heat resistance, flame-retardance and processability characteristics and are thus suitable for use in forming structural and/or working components for electrical appliances, automobiles or other devices which require such properties and/or which are used in high temperature environments. For example, the compositions of the present invention are preferably used in the preparation of electrical and electronic components such as connectors, switches, relays or coil bobbins; and capacitor casing motor parts.

The present invention will now be described in more detail by referring to the following non-limiting Examples.

## EXAMPLES

The characteristic values which will be described in the Examples below were determined by the following methods:

### I. Tensile Test

Determined according to ASTM D 638. In addition, the test piece for the tensile test was stored in a thermostatic chamber at 120 °C for 500 hours, and then examined for elongation and retention of elongation in a similar manner to that described above.

### II. Burning Test (UL-94)

Five test pieces (thickness: 0.79mm, 1/32 inch) were examined for burning characteristics and drip resistance during burning according to the Subject 94 of Underwriters' Laboratories (UL-94).

### III. Processability in molding

A rectangular article (15W x 40L x 30H x 1mm thickness) was molded under the conditions which will be described below. The state of an ejection pin mark was visually observed and was qualitatively evaluated according to the following five ratings;

1 ←——————————————→ 5

none (good)　　observed (slight)　　(significant)

Molding conditions:
Cylinder temperature: 250 °C
Mold temperature: 60 °C

IV. Surface appearance

The tensile test piece was kept at 120 °C for 72 hours to examine the test piece for bleeding or blister with the naked eyes. Observed anomalies were indicated by "O".

Examples 1 to 10 and Comparative Examples 1 to 7

Polybutylene terephthalate (A) was mixed with ethylenebistetrabromophthalimide (B), a bisoxazoline compound (C) and, if necessary, polytetraflyoroethylene (D) and/or a component (E) at a ratio given in Table 1. The obtained mixture was pelletized with an extruder.

The pellet thus prepared was injection molded into a test piece. The test piece was examined according to the above methods. The results are shown in Table 1.

For comparison, the same procedure as that described above was repeated except that either no component (C) was used, or a flame-retardant not in accordance with the present invention (decarbomodiphenyl ether) was used as the component (B). These comparative results are also shown in Table 1. (In all of the Examples and Comparative Examples, antimony trioxide was used as an auxiliary flame-retardant in an amount of 5.0%).

Examples 11 to 14 and Comparative Examples 8 to 10

Polybutylene terephthalate (A) was mixed with ethylenebistetrabromophthalimide (B), a bisoxazoline compound (C) given in Table 2 and, if necessary, polytetrafluoroethylene (D) (and if necessary, a component (E)) and glass fiber at a ratio given in Table 2. The obtained mixture was treated and examined in a similar manner to that described in Example 1. The results are shown in Table 2.

For comparison, the same procedure as that described above was repeated except that no bisoxazoline compound (C) was used. The results are also shown in Table 2.

Examples 15 and 16 and Comparative Examples 11 and 12

The same procedure as that described in Example 12 was repeated except that the component (A) was replaced by polyethylene terephthalate (Example 15) or a mixture comprising polybutylene terephthalate and polyethylene terephthalate (Example 16). The results are shown in Table 2.

As Comparative Examples, the same procedure as that described above was prepared except that no bisoxazoline compound (C) was used. The results are shown in Table 2.

Table 1

| | | | Unit | Example No. 1 | 2 | 3 | 4 | 5 | 6 | 7 | 8 | 9 | 10 | Comparative Example No. 1 | 2 | 3 | 4 | 5 | 6 | 7 |
|---|---|---|---|---|---|---|---|---|---|---|---|---|---|---|---|---|---|---|---|---|
| Composition | (A) polybutylene terephthalate | | wt.% | 81.8 | 80.8 | 81.3 | 80.3 | 80.0 | 79.5 | 75.5 | 80.0 | 80.7 | 80.9 | 82.0 | 81.5 | 81.0 | 80.5 | 80.3 | 81.2 | 81.4 |
| | (B) halogenated bisimide*1 | | 〃 | 13.0 | 13.0 | 13.0 | 13.0 | 13.0 | 13.0 | 13.0 | 13.0 | 13.0 | 13.0 | 13.0 | 13.0 | 13.0 | 13.0 | | 13.0 | 13.0 |
| | (B')decabromodiphenyl ether | | 〃 | | | | | | | | | | | | | | | 13.0 | | |
| | (C) bisoxazoline compound*2 C-1 | | 〃 | 0.2 | 0.2 | 0.2 | 0.2 | 0.5 | 1.0 | 5.0 | | 0.5 | 0.5 | | | | | 0.2 | | |
| | C-2 | | 〃 | | | | | | | | 0.5 | | | | | | | | | |
| | (D) polytetrafluoroethylene | | 〃 | | | 0.5 | 0.5 | 0.5 | 0.5 | 0.5 | 0.5 | 0.5 | 0.3 | | 0.5 | | 0.5 | 0.5 | 0.5 | 0.3 |
| | (E) olefin polymer *3 | | 〃 | | 1.0 | | 1.0 | 1.0 | 1.0 | 1.0 | 1.0 | | | | | 1.0 | 1.0 | 1.0 | | |
| | (D) fatty acid ester*4 | | 〃 | | | | | | | | | 0.3 | 0.3 | | | | | | 0.3 | 0.3 |
| Quality (properties) | burning test | (UL-94) | — | V-2 | V-2 | V-0 | V-0 | V-0 | V-0 | V-0 | V-0 | V-0 | V-0 | V-2 | V-0 | V-2 | V-0 | V-0 | V-0 | V-0 |
| | | number of drips | drip | 5 | 5 | 0 | 0 | 0 | 0 | 0 | 0 | 0 | 0 | 5 | 0 | 5 | 0 | 0 | 0 | 0 |
| | surface appearance | | — | ○ | ○ | ○ | ○ | ○ | ○ | ○ | ○ | ○ | ○ | ○ | ○ | ○ | ○ | × | ○ | ○ |
| | tensile strength | | kg/cm² | 520 | 515 | 517 | 523 | 521 | 520 | 518 | 520 | 522 | 525 | 513 | 515 | 518 | 525 | 510 | 522 | 528 |
| | tensile elongation | | % | 23 | 24 | 25 | 27 | 30 | 35 | 48 | 28 | 28 | 28 | 19 | 20 | 20 | 22 | 21 | 22 | 21 |
| | after 120℃, 500 hours | tensile elongation | % | 9.2 | 10 | 11 | 14 | 19 | 28 | 40 | 18 | 19 | 18 | 2.9 | 3.2 | 4.2 | 5.3 | 6.7 | 5.7 | 5.0 |
| | | retention of elongation | % | 40 | 42 | 44 | 52 | 63 | 80 | 83 | 64 | 68 | 64 | 15 | 16 | 21 | 24 | 32 | 26 | 24 |
| | processability in molding | | — | 4 | 2 | 4 | 2 | 2 | 2 | 2 | 2 | 1 | 1 | 5 | 5 | 3 | 3 | 4 | 2 | 2 |

*1 ethylenebistetrabromophthalimide

*2 C-1 : 2,2'-m-phenylenebis(2-oxazoline)

C-2 : 2,2'-p-phenylenebis(2-oxazoline)

*3 low-molecular-weight polyethylene (polyethylene wax)

*4 pentaerythritol tetrastearate

Table 2

| | | Unit | Example No. 11 | 12 | 13 | 14 | 15 | 16 | Comparative Example No. 8 | 9 | 10 | 11 | 12 |
|---|---|---|---|---|---|---|---|---|---|---|---|---|---|
| Composition | (A) polybutylene terephthalate | wt.% | 51 | 56 | 56.7 | 50.5 | | 42 | 51.5 | 56.5 | 57.2 | | 42.5 |
| | (A) polyethylene terephthalate | 〃 | | | | | 56 | 14 | | | | 56.5 | 14 |
| | (B) halogenated bisimide*1 | 〃 | 13 | 7 | 7 | 13 | 7 | 7 | 13 | 7 | 7 | 7 | 7 |
| | (B')decabromodiphenyl ether | 〃 | | | | | | | | | | | |
| | (C) bisoxazoline*2 C-1 | 〃 | 0.5 | 0.5 | 0.5 | 0.5 | 0.5 | 0.5 | | | - | | |
| | C-2 | 〃 | | | | | | | | | - | | |
| | (D) polytetrafluoroethylene | 〃 | 0.5 | 0.5 | 0.5 | | 0.5 | 0.5 | 0.5 | 0.5 | 0.5 | 0.5 | 0.5 |
| | (E) olefin polymer*3 | 〃 | | 1.0 | | 1.0 | 1.0 | 1.0 | | 1.0 | | 1.0 | 1.0 |
| | (E) fatty acid ester*4 | 〃 | | | 0.3 | | | | | | 0.3 | | |
| | glass fiber | 〃 | 30 | 30 | 30 | 30 | 30 | 30 | 30 | 30 | 30 | 30 | 30 |
| Quality (properties) | burning test (UL-94) | — | V-0 | V-0 | V-0 | V-1 | V-0 | V-0 | V-0 | V-0 | V-0 | V-0 | V-0 |
| | burning test number of drips | drip | 0 | 0 | 0 | 3 | 0 | 0 | 0 | 0 | 0 | 0 | 0 |
| | surface appearance | — | ○ | ○ | ○ | ○ | ○ | ○ | ○ | ○ | ○ | ○ | ○ |
| | tensile strength | kg/cm² | 1480 | 1470 | 1477 | 1482 | 1545 | 1513 | 1490 | 1478 | 1483 | 1550 | 1520 |
| | tensile elongation | % | 2.4 | 2.6 | 2.8 | 2.5 | 2.8 | 3.5 | 2.3 | 2.4 | 2.4 | 2.4 | 3.0 |
| | after 120℃, 500 hours tensile elongation | % | 1.5 | 1.8 | 2.1 | 1.5 | 2.0 | 2.6 | 0.8 | 0.9 | 0.9 | 0.9 | 1.0 |
| | after 120℃, 500 hours retention of elongation | % | 63 | 69 | 75 | 60 | 71 | 74 | 35 | 38 | 38 | 38 | 33 |
| | processability in molding | — | 3 | 1 | 1 | 1 | 2 | 2 | 4 | 2 | 1 | 2 | 2 |

*1 ethylenebistetrabromophthalimide

*2 C-1 : 2,2'-m-phenylenebis(2-oxazoline)

C-2 : 2,2'-p-phenylenebis(2-oxazoline)

*3 low-molecular-weight polyethylene (polyethylene wax)

*4 pentaerythritol tetrastearate

While the invention has been described in connection with what is presently considered to be the most practical and preferred embodiment, it is to be understood that the invention is not be be limited to the disclosed embodiment, but on the contrary, is intended to cover various modifications and equivalent arrangements included within the spirit and scope of the appended claims.

## Claims

1. A flame-retardant polyester resin composition comprising, based on the total weight of the composition:

(A) a thermoplastic polyester;

(B) between 0.5 and 25% by weight of a halogenated bisimide compound represented by the general

formula (1):

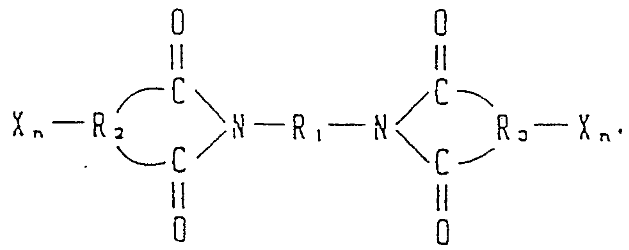

wherein $R_1$ is a divalent organic group, $R_2$ and $R_3$, which may be the same or different, are divalent organic groups containing at least one halogen atom, n is 1 to 4 and n′ is 0 to 4, and

(C) between 0.01 and 10% by weight of a bisoxazoline compound.

2. A flame-retardant polyester resin composition as claimed in claim 1, wherein $R_1$ in the general formula (1) is selected from ethylene, butylene and hexamethylene groups.

3. A flame-retardant polyester resin composition as claimed in claim 1 or claim 2, wherein $R_2$ and $R_3$ in the general formula (1) are each selected from phenylene groups having 1 to 4 halogen atoms.

4. A flame-retardant polyester resin composition as claimed in any preceding claim, in which the bisoxazoline compound (C) is represented by the general formula (2):

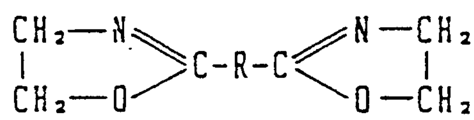

... (2)

wherein R is a phenylene group.

5. A flame-retardant polyester resin composition as claimed in any preceding claim, in which, based on the total weight of the composition, the amount of the bisimide compound (B) is between 1 and 15% by weight and the amount of the the bisoxazoline compound (C) is between 0.03 and 5% by weight

6. A flame-retardant polyester resin composition as claimed in any preceding claim, which further contains:

(D) between 0.1 and 5% by weight, based on the total weight of the composition, of a polytetrafluorethylene resin.

7. A flame-retardant polyester resin composition as claimed in any preceding claim, which further contains:

(E) between 0.05 and 5% by weight, based on the total weight of the composition, of at least one compound selected from olefin polymers, fatty acid amides, and fatty acid esters of polyhydric alcohols.

8. A flame-retardant polyester resin composition as claimed in claim 7, wherein the compound (E) is a low molecular weight polyethylene.

9. A flame-retardant polyester resin composition as claimed in claim 7, wherein the compound (E) is an ester of a polyhydric alcohol selected from glycerin and pentaerythritol with a fatty acid having at least 12 carbon atoms.

10. A flame-retardant polyester resin composition as claimed in any one of claims 7 to 9, in which the amount of the compound (E) is between 0.1 and 3% by weight, based on the total weight of the composition.

European Patent Office

# EUROPEAN SEARCH REPORT

Application Number

EP 90 30 5770

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | GB-A-2 098 231 (DYNAMIT NOBEL AG)<br>* Claims 1,23-24 * | 1 | C 08 K 5/16<br>C 08 L 67/02 //<br>(C 08 K 5/16<br>C 08 K 5:3415<br>C 08 K 5:353)<br>(C 08 K 5/16<br>C 08 K 5:3417<br>C 08 K 5:353) |
| A | EP-A-0 282 263 (POLYPLASTICS CO., LTD)<br>* Claims 1,6 * | 1 | |
| A | EP-A-0 188 634 (DU PONT)<br>* Claim 1 * | 1 | |
| A | US-A-4 467 062 (E. HORNBAKER et al.)<br>* Claim 1 * | 1 | |
| A | CHEMICAL PATENT INDEX, BASIC ABSTRACTS JOURNAL, section A, week 8746, 9th October 1987, A0427, no. 87-324565/46, Derwent Publications Ltd, London, GB; & JP-A-62 230 844 (KANEGAFUCHI CHEM. K.K.) 31-03-1986<br>* Abstract * | 1 | |
| | | | TECHNICAL FIELDS SEARCHED (Int. Cl.5) |
| | | | C 08 K<br>C 08 L |

The present search report has been drawn up for all claims

| Place of search | Date of completion of the search | Examiner |
|---|---|---|
| THE HAGUE | 07-09-1990 | HOFFMANN K.W. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)